# FASCICULE DE BREVET EUROPEEN

(11) **EP 0 336 789 B1**
(45) Date de publication et mention de la délivrance du brevet: **19.05.1993**
(21) Numéro de dépôt: 89400605.5
(22) Date de dépôt: 03.03.1989
(51) Int. Cl.: F16F 13/00

(54) **Articulation élastique à rigification hydraulique**
Elastische Lagerung mit hydraulischer Versteifung
Elastic mounting with a hydraulic stiffening

(30) Priorité: 08.03.1988 FR 8802954
(43) Date de publication de la demande: 11.10.1989
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Chateaugiron (FR); Robic, Pascal, F-35580-Guignen (FR)
(74) Mandataire: Moncheny, Michel

(56) Documents cités:
- FR-A- 2 555 688
- US-A- 3 698 703
- PATENT ABSTRACTS OF JAPAN, vol. 11, no. 157 (M-590)[2604], 21 mai 1987, page 12 M 590; & JP-A-61 286 633 (NISSAN MOTOR CO. LTD) 17-12-1986

## Description

La présente invention a pour objet une articulation élastique du type comportant une armature externe cylindrique et une armature interne cylindrique coaxiale reliées entre elles par un bloc en matériau élastomère et susceptibles de se déplacer l'une par rapport à l'autre.

Un tel type d'articulation élastique connu du document US-A-3 698 703 est notamment utilisé pour le montage d'un train roulant, tel que l'essieu arrière d'un véhicule automobile par rapport à la caisse de ce dernier.

Dans ce dernier type de montage il est courant d'utiliser deux articulations élastiques situées symétriquement de part et d'autre de l'axe longitudinal du véhicule automobile. L'articulation élastique ne doit pas posséder la même raideur élastique selon toutes les directions. Afin d'obtenir un bon filtrage des vibrations transmises par le train roulant à la caisse du véhicule, il est nécessaire que l'articulation présente la raideur la plus faible possible dans le sens longitudinal. La raideur dans le sens vertical doit être compatible avec la charge de la caisse du véhicule que supporte l'articulation.

Par contre la raideur la plus grande possible est nécessaire dans la direction transversale afin d'assurer le guidage transversal du train roulant par rapport à la caisse du véhicule.

La présente invention a pour but de proposer une articulation élastique possédant un rapport de raideur transversale sur raideur verticale qui soit très élevé et notamment supérieur à 20.

Conformément à l'invention ce but est atteint au moyen d'une articulation élastique caractérisée en ce qu'elle comporte au moins une chambre déformable hermétiquement fermée, remplie d'un liquide incompressible, formée au moins en partie dans le bloc en matériau élastomère et agencée entre deux portions de chacune des deux armatures de manière à augmenter la raideur élastique statique de l'articulation selon une direction de déplacement relative des armatures sensiblement perpendiculaire à un plan axial de l'articulation et au moins dans le sens correspondant au rapprochement de ces portions.

Grâce à cette caractéristique, une articulation élastique agencée sur la caisse du véhicule, de manière à ce que ladite direction de déplacement relatif soit la direction transversale du véhicule, permet d'accroître très fortement la raideur élastique de l'articulation dans cette direction du fait de l'incompressibilité du liquide contenu dans la chambre étanche qui s'oppose au rapprochement des deux portions d'armatures.

Selon d'autres caractéristiques de l'invention :
- la chambre est constituée par une cavité formée dans le bloc en matériau élastomère, délimmitée radialement par les deux faces en vis à vis des portions d'armatures et latéralement par le matériau élastomère ;
- la cavité est également délimitée radialement par une paroi d'extrémité, venue de matière avec le bloc, et adhérisée sur la face en vis à vis d'une des portions d'armatures ;
- la cavité est une cavité sensiblement parallélépipédique dont les parois latérales définissent un contour rectangulaire et s'étendent dans des plans perpendiculaires audit plan axial ;
- le bloc en matériau élastomère est fixé par adhérisation à l'armature cylindrique interne ;
- l'articulation comporte une armature cylindrique de renfort dont la surface extérieure est complémentaire de la surface intérieure de l'armature cylindrique externe et sur la surface intérieure de laquelle est adhérisé le bloc en matériau élastomère, et en ce que l'armature de renfort comporte un trou entourant latéralement ladite cavité ;
- le bloc en matériau élastomère muni de son armature de renfort est monté comprimé radialement dans l'armature cylindrique externe, et l'étanchéité de la cavité est assurée par un bourrelet périphérique interne venu de matière avec les parois latérales de la cavité au voisinage de la portion de l'armature externe et que est monté serré entre cette dernière et le bord périphérique de trou de l'armature de renfort;
- le bloc en matériau élastomère s'étend axialement sensiblement sur toute la longueur de l'articulation, et la cavité est formée au milieu de ladite longueur ;
- le bloc en matériau élastomère comporte deux évidements périphériques axiaux débouchant agencés symétriquement de part et d'autre de l'axe de l'articulation de manière à permettre un déplacement relatif des deux armatures dans ledit plan axial ;
- l'articulation comporte une seconde chambre étanche déformable remplie d'un liquide qui est agencée entre deux autres portions de chacune des deux armatures que sont symétriques desdites deux portions d'armatures par rapport audit plan axial de manière à augmenter la raideur élastique de l'articulation dans ladite direction de déplacement relatif et dans les deux sens de déplacement.

D'autres caractéristiques et avantages de l'invention apparaîtront à la lecture de la description détaillée que va suivre pour la compréhension de laquelle on se reportera aux dessins annexés dans lesquels :
- la figure 1 est une vue latérale schématique illustrant le principe général de montage d'un train arrière par rapport à la caisse d'un véhicule automobile ;
- la figure 2 est une vue selon la flèche A de la figure 1 ;
- la figure 3 est une vue montrant l'agencement géométrique d'une articulation élastique en vue du montage du train arrière représenté aux figures 1 et 2 ;
- la figure 4 est une vue en coupe selon la ligne 4-4 de la figure 5, d'une articulation élastique réalisée conformément aux enseignements de l'invention ;
- la figure 5 est une vue en coupe selon la ligne 5-5 de la figure 4 ; et
- la figure 6 est une vue en coupe selon la ligne 6-6 de la figure 4.

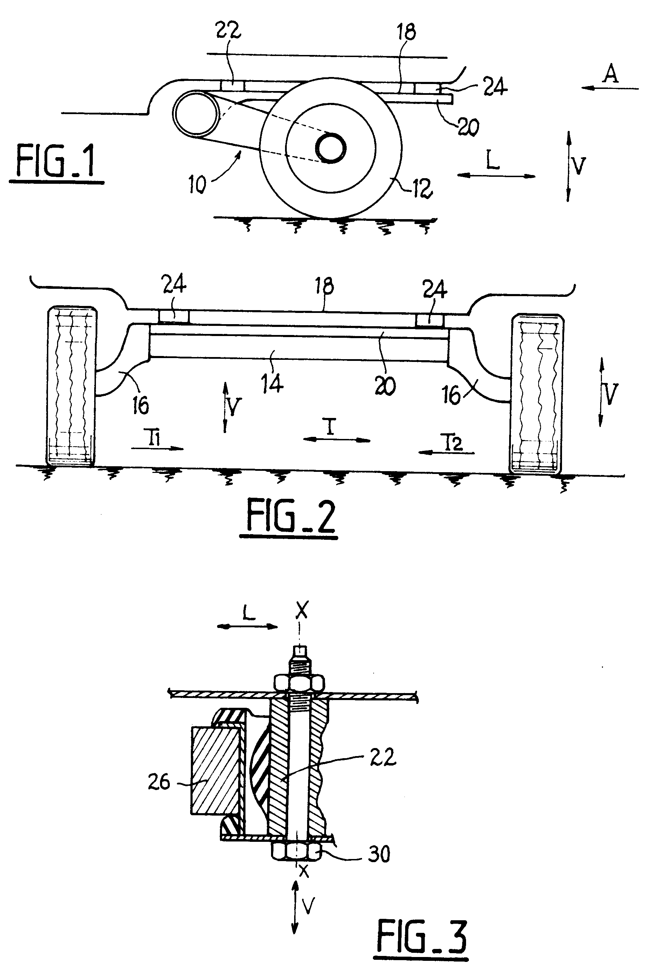

On a représenté aux figures 1 et 2 un train roulant arrière de véhicule automobile comportant notamment des roues 12 reliées à une poutre centrale 14 par des bras latéraux 16. La poutre 14 est reliée à la caisse 18 par une traverse de train arrière 20 avec interposition de deux articulations élastiques 22 et de deux liaisons élastiques 24.

Chaque articulation élastique 22 est soumise à des efforts selon trois directions principales, c'est-à-dire selon la direction verticale V, la direction longitudinale L et la direction transversale T.

Les efforts appliqués selon la direction transversale T correspondent à un déplacement relatif du train roulant 10 par rapport à la caisse 18 du véhicule selon une direction sensiblement parallèle à la direction T, ce déplacement pouvant s'effectuer selon deux sens opposés T1 et T2.

L'articulation élastique 22, comme on peut le constater à la figure 3, présente une forme générale cylindrique circulaire et elle est agencée de manière que son axe longitudinal X-X soit perpendiculaire à la direction longitudinale L du véhicule.

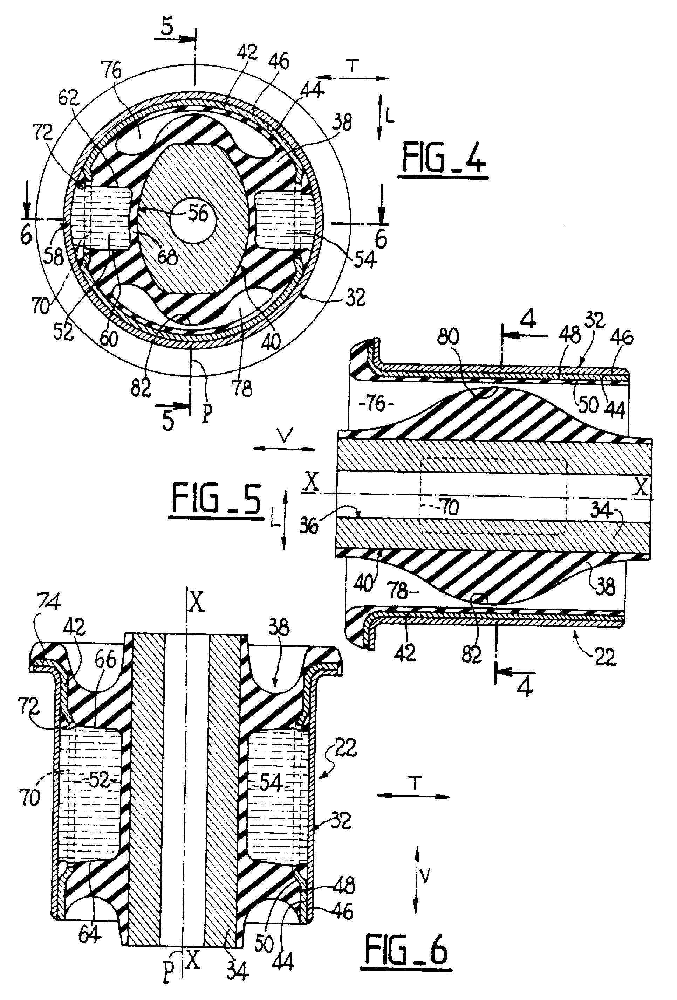

L'articulation élastique 22 représentée aux figures 4 à 6 comprend une armature cylindrique circulaire externe 32 réalisée en tôle et une armature cylindrique interne 34 de section oblongue ou cylindrique et coaxiale, suivant l'axe X-X, à l'armature cylindrique externe 32.

L'armature interne 34 qui peut être métallique ou réalisée en matière plastique, comporte un alésage interne 36 en permettant le montage, par exemple sur une traverse 26 de la figure 3, au moyen d'une tige axiale de liaison 30.

L'articulation élastique 22 comporte également un bloc en matériau élastomère 38 qui relie entre elles les deux armatures cylindriques 32 et 34.

Le bloc en matériau élastomère 38 s'étend sensiblement sur toute la longueur de l'articulation et est fixé par adhérisation à la surface extérieure 40 de l'armature interne 34 qu'il entoure sur toute sa surface.

L'articulation élastique 22 comporte une armature cylindrique de renfort 42.

La surface extérieure 44 de l'armature de renfort 42 est complémentaire de la surface intérieure 46 de l'armature cylindrique externe 32. La surface intérieure 48 de l'armature de renfort 42 est fixée par adhérisation sur la surface périphérique externe 50 du bloc en matériau élastomère 38.

Le bloc en matériau élastomère 38 muni de son armature cylindrique externe de renfort 32 est monté comprimé à l'intérieur de l'armature cylindrique externe 32.

Conformément à l'invention le bloc en matériau élastomère 38 est pourvu de deux cavités étanches déformables 52 et 54 remplies d'un liquide qui sont identiques et agencées symétriquement par rapport à un plan axial P passant par l'axe X-X de l'articulation élastique 22.

Les deux chambres 52 et 54 étant identiques on décrira maintenant en détail la chambre 52.

La chambre 52 est délimitée radialement, vers l'intérieur par une portion cylindrique 56 de l'armature interne 34, et vers l'extérieur par une portion cylindrique en vis à vis 58 de l'armature cylindrique externe 32.

La chambre 52 est une cavité parallélépipédique formée dans le bloc 38 délimitée latéralement par le bloc en matériau en élastomère de façon que ses deux paires de parois latérales 60-62, et 64-66 respectivement définissent un contour de cavité rectangulaire et s'étendent dans des plans sensiblement perpendiculaires à un plan axial P.

L'étanchéité de la chambre 52 est assurée radialement vers l'intérieur par rapport à l'armature cylindrique interne 32 par une paroi d'extrémité mince 68, venue de matière avec le bloc en matériau élastomère 38, et adhérisée sur la surface périphérique extérieure 40 de la portion d'armature 56.

La cavité 52 s'étend radialement jusqu'à la portion cylindrique d'armature externe 58 grâce à un trou correspondant 70, de contour rectangulaire, formé dans l'armature de renfort 42.

L'étanchéité radiale extérieure de la cavité 52 est assurée au moyen d'un bourrelet périphérique interne 72 venu de matière avec les parois latérales 60-66 de la cavité au voisinage de la portion 58 de l'armature externe 32 et qui est monté serré entre cette dernière et le bord périphérique du trou 70.

Lorsque l'articulation élastique 22 représentée aux figures 4 à 6 est utilisée pour le montage d'un train roulant de véhicule automobile, elle doit être disposée, comme cela est indiqué aux figures, de manière à ce que la direction transversale T du véhicule soit perpendiculaire au plan axial P de l'articulation.

Selon cet agencement on comprend aisément que la raideur élastique de l'articulation élastique suivant la direction T est très fortement augmentée du fait de l'incompressibilité du liquide contenu dans les chambres 52 et 54 qui s'oppose au déplacement relatif de l'armature interne 34 par rapport à l'armature cylindrique externe 32 selon une direction perpendiculaire au plan axial P et ceci de manière symétrique dans les deux sens de déplacement T1 et T2.

Au contraire, lorsque l'armature interne 34 est sollicitée longitudinalement, c'est-à-dire parallèlement à la direction L, par rapport à l'armature cylindrique externe 32, les chambres 52 et 54 n'ont aucun effet amplificateur de la raideur élastique, leurs parois latérales respectives travaillant alors au "cisaillement". Afin d'éviter que le bloc en matériau élastomère 38 et son armature de renfort 42 ne bougent axialement par rapport à l'armature cylindrique externe 32, cette dernière comporte, à une de ses extrémités un bord radial replié par emboutissage 74.

Conformément à l'invention le bloc en matériau élastomère 38 comporte également deux évidements périphériques axiaux débouchants 76 et 78 agencés symétriquement de part et d'autre de l'axe X-X de l'articulation 22 de manière à permettre un déplacement relatif des deux armatures 32 et 34 dans le plan axial P c'est-à-dire parallèlement à la direction verticale V.

Comme on peut le constater à la figure 5, chaque évidement axial 76, 78 possède un profil interne en creux, c'est-à-dire que le bloc en matériau élastomère possède deux bossages sphériques convexes symétriques 80, et 82 respectivement, qui limitent les débattements de l'armature cylindrique interne 34 dans le plan axial P par rapport à l'armature cylindrique externe 32.

La réalisation d'une articulation élastique 22, afin d'assurer un parfait remplissage des chambres 52 et 54 par un liquide incompressible tel que de l'eau additionnée d'anti-gel, doit être effectuée en immersion dans un bain de ce liquide.

Le montage de l'articulation élastique 22 dans le boîtier 28 est effectué de manière à ce que son armature cylindrique externe 32 soit montée serrée dans l'alésage 30 et ceci de façon à ce que son plan axial P demeure toujours dans un plan sensiblement parallèle à la direction verticale V du véhicule.

## Revendications

1. Articulation élastique (22) du type comportant une armature externe cylindrique (32) et une armature interne (34) coaxiale reliées entre elles par un bloc en matériau élastomère (38) et susceptibles de se déplacer l'une par rapport à l'autre, caractérisée en ce qu'elle comporte au moins une chambre déformable (52, 54) hermétiquement fermée, remplie d'un liquide incompressible, formée au moins en partie dans le bloc en matériau élastomère et agencée entre deux portions (56, 58) de chacune des deux armatures (34, 32) de manière à augmenter la raideur élastique statique de l'articulation selon une direction (T) de déplacement relatif des armatures (32, 34) sensiblement perpendiculaire à un plan axial (P) de l'articulation et au moins dans le sens correspondant au rapprochement de ces portions (56, 58).

2. Articulation élastique selon la revendication 1, caractérisée en ce que la chambre (52) est constituée par une cavité formée dans le bloc en matériau élastomère (38), délimitée radialement par les deux faces en vis-à-vis des portions d'armatures (56, 58) et latéralement par le matériau élastomère.

3. Articulation élastique selon la revendication 2, caractérisée en ce que la cavité (52) est également délimitée radialement par une paroi d'extrémité (68), venue de matière avec le bloc (38), et adhérisée sur la face en vis-à-vis (40) d'une (56) des portions d'armatures.

4. Articulation élastique selon l'une des revendications 2 ou 3, caractérisée en ce que la cavité (52) est une cavité sensiblement parallélépipédique dont les parois latérales (60 - 66) définissent un contour rectangulaire et s'étendent dans des plans perpendiculaires audit plan axial (P).

5. Articulation élastique selon l'une quelconque des revendications précédentes caractérisée en ce que le bloc en matériau élastomère (38) est fixé par adhérisation à l'armature cylindrique interne (34).

6. Articulation élastique selon l'une quelconque des revendications 2 à 5 caractérisée en ce qu'elle comporte une armature cylindrique de renfort (42) dont la surface extérieure (44) est complémentaire de la surface intérieure (46) de l'armature cylindrique externe (32) et sur la surface intérieure (48) de laquelle est adhérisé le bloc en matériau élastomère (38), et en ce que l'armature de renfort (42) comporte un trou (70) entourant latéralement la cavité (52).

7. Articulation élastique selon la revendication 6 caractérisée en ce que le bloc en matériau élastomère (38) muni de son armature de renfort (42) est monté comprimé radialement dans l'armature cylindrique externe (32), et en ce que l'étanchéité de la cavité (52) est assurée par un bourrelet périphérique interne (72) venu de matière avec les parois latérales (60-66) de la cavité (52) au voisinage de la portion (58) de l'armature externe (32) et qui est montée serrée entre cette dernière et le bord périphérique du trou (70) de l'armature de renfort.

8. Articulation élastique selon l'une quelconque des revendications 2 à 7 caractérisée en ce que le bloc en matériau élastomère (38) s'étend axialement sur toute la longueur de l'articulation, et en ce que la cavité (52) est formée au milieu de ladite longueur.

9. Articulation élastique selon l'une quelconque des revendications précédentes caractérisée en ce que le bloc en matériau élastomère (38) comporte deux évidements périphériques axiaux débouchants (76, 78) agencés symétriquement de part et d'autre de l'axe (X-X) de l'articulation de manière à permettre un déplacement relatif des deux armatures (32, 34) dans ledit plan axial (P).

10. Articulation élastique selon l'une quelconque des revendications précédentes caractérisée en ce qu'elle comporte une seconde chambre (54) étanche déformable remplie d'un liquide et agencée entre deux autres portions de chacune des deux armatures (32, 34) qui sont symétriques desdites deux portions d'armatures (56, 58) par rapport audit plan axial (P) de manière à augmenter la raideur élastique de l'articulation dans ladite direction (T) de déplacement relatif et dans les deux sens de déplacement.

## Patentansprüche

1. Elastische Lagerung (22) mit einer zylindrischen äußeren Armatur (32) und einer koaxialen zylindrischen inneren Armatur (34), die durch einen Block (38) aus elastomerem Material miteinander verbunden und relativ zueinander beweglich sind, dadurch **gekennzeichnet**, daß sie wenigstens eine hermetisch geschlossene verformbare Kammer (52,54) aufweist, die mit einer inkompressiblen Flüssigkeit gefüllt ist und wenigstens teilweise in dem Block aus elastomerem Material ausgebildet und derart zwischen zwei Teilen (56,58) jeder der beiden Armaturen (34,32) angeordnet ist, daß die statische elastische Steifheit der Lagerung längs einer Achse (T) der Relativauslenkung der Armaturen (32,34) im wesentlichen rechtwinklig zu einer axialen Ebene (P) der Lagerung wenigstens in der einer Annäherung dieser Teile (56,58) entsprechenden Richtung erhöht ist.

2. Elastische Lagerung nach Anspruch 1, dadurch **gekennzeichnet**, daß die Kammer (52) durch einen in dem Block (38) aus elastomerem Material gebildeten Hohlraum gebildet wird, der in Radialrichtung durch die beiden gegenüberliegenden Flächen der Teile (56,58) der Armaturen und seitlich durch das elastomere Material begrenzt wird.

3. Elastische Lagerung nach Anspruch 2, dadurch **gekennzeichnet**, daß der Hohlraum (52) auch in Radialrichtung durch eine Abschlußwand (68) begrenzt wird, die in einem Stück mit dem Block (38) ausgebildet ist und an der gegenüberliegenden Oberfläche (40) eines (56) der Armaturteile haftet.

4. Elastische Lagerung nach Anspruch 2 oder 3, dadurch **gekennzeichnet**, daß der Hohlraum (52) im wesentlichen die Form eines Parallelflachs hat, dessen Seitenwände (60-66) einen rechteckigen Umriß bilden und sich in Ebenen rechtwinklig zu der axialen Ebene (P) erstrecken.

5. Elastische Lagerung nach einem der vorstehenden Ansprüche, dadurch **gekennzeichnet**, daß der Block (38) aus elastomerem Material durch Haftverbindung (Anvulkanisation) an der zylindrischen inneren Armatur (34) befestigt ist.

6. Elastische Lagerung nach einem der Ansprüche 2 bis 5, dadurch **gekennzeichnet**, daß sie eine zylindrische Verstärkungsarmatur (42) aufweist, deren äußere Oberfläche (44) zu der inneren Oberfläche (46) der zylindrischen äußeren Armatur (32) komplementär ist und auf deren innerer Oberfläche (48) der Block (38) aus elastomerem Material haftet und daß die Verstärkungsarmatur (42) eine den Hohlraum (52) seitlich umgebende Öffnung (70) aufweist.

7. Elastische Lagerung nach Anspruch 6, dadurch **gekennzeichnet**, daß der mit seiner Verstärkungsarmatur (42) versehene Block (38) aus elastomerem Material radial komprimiert in der zylindrischen äußeren Armatur (32) montiert ist und daß die Dichtheit des Hohlraums (52) durch einen Dichtwulst (72) am inneren Umfang gewährleistet wird, der in einem Stück mit den Seitenwänden (60-66) des Hohlraums (52) in der Nähe des Teils (58) der äußeren Armatur (32) ausgebildet ist und zwischen dieser letzteren und dem Umfangsrand der Öffnung (70) der Verstärkungsarmatur eingespannt ist.

8. Elastische Lagerung nach einem der Ansprüche 2 bis 7, dadurch **gekennzeichnet**, daß der Block (38) aus elastomerem Material sich axial über die gesamte Länge der Lagerung erstreckt und daß der Hohlraum (52) in der Mitte dieser Länge ausgebildet ist.

9. Elastische Lagerung nach einem der vorstehenden Ansprüche, dadurch **gekennzeichnet**, daß der Block (38) aus elastomerem Material am Umfang zwei offene axiale Ausnehmungen (76,78) aufweist, die symmetrisch beiderseits der Achse (X-X) der Lagerung derart angeordnet sind, daß sie eine Relativauslenkung der beiden Armaturen (32,34) in der genannten axialen Ebene (P) gestatten.

10. Elastische Lagerung nach einem der vorstehenden Ansprüche, dadurch **gekennzeichnet**, daß sie eine zweite dichte, verformbare, mit einer Flüssigkeit gefüllte Kammer (54) aufweist, die zwischen zwei anderen Teilen jeder der beiden Armaturen (32,34) angeordnet ist, die symmetrisch zu den beiden Teilen der Armaturen (56,58) in bezug auf die genannte axiale Ebene (P) derart angeordnet sind, daß die elastische Steifheit der Lagerung längs der genannten Achse (T) der Relativauslenkung in beiden Auslenkungsrichtungen erhöht wird.

## Claims

1. An elastic joint (22) of the type comprising an outer cylindrical member (32) and a coaxial inner member (34) which are connected together by means of a block of elastomer material (38) and can move with respect to each other, characterised in that it comprises at least one hermetically sealed deformable chamber (52, 54), filled with an incompressible liquid, at least partly constructed within the block of elastomer material and located between two portions (56, 58) of each of the two members (34, 32) in such a way as to increase the static elastic stiffness of the joint in one direction of movement (T) relative to the members (32, 34) which is substantially perpendicular to an axial plane (P) of the joint and at least in a direction corresponding to that in which these portions (56, 58) come together.

2. An elastic joint according to claim 1, characterised in that the chamber (52) comprises a cavity formed within the block of elastomer material (38) and is bounded radially by the two opposing sides of the portions (56, 58) of the members and laterally by the elastomer material.

3. An elastic joint according to claim 2, characterised in that the cavity (52) is also radially bounded by an end wall (68), which is integral with the block (38) and is bonded to the opposite face (40) of one (56) of the portions of the members.

4. An elastic joint according to either of claims 2 or 3, characterised in that the cavity (52) is a substantially rectangular cavity, the side walls (60-66) of which have a rectangular perimeter and extend in planes perpendicular to the said axial plane (P).

5. An elastic joint according to any one of the foregoing claims, characterised in that the block of elastomer material (38) is bonded to the inner cylindrical member (34).

6. An elastic joint according to any one of claims 2 to 5, characterised in that it comprises a reinforcing cylindrical member (42) whose outer surface (44) is complementary to the inner surface (46) of the outer cylindrical member (32), the inner surface of which (48) is bonded to the block of elastomer material (38), and in that the reinforcing member (42) comprises a hole (70) which surrounds the cavity (52) laterally.

7. An elastic joint according to claim 6, characterised in that the block of elastomer material (38) fitted with its reinforcing member (42) is mounted in radial compression within the outer cylindrical member (32) and in that the cavity (52) is sealed by an inner peripheral bead (72) which is integral with the side walls (60-66) of the cavity (52) in the vicinity of the portion (58) of the outer member (32) and which is clamped between the latter and the peripheral edge of the hole (70) in the reinforcing member.

8. An elastic joint according to any one of claims 2 to 7, characterised in that the block of elastomer material (38) extends axially over the entire length of the joint, and in that the cavity (52) is formed in the middle of the said length.

9. An elastic joint according to any one of the foregoing claims characterised in that the block of elastomer material (38) comprises two axial open peripheral spaces (76, 78) provided symmetrically on either side of the axis (X-X) of the joint in such a way as to permit relative displacement of the two members (32, 34) in the said axial plane (P).

10. An elastic joint according to any one of the foregoing claims characterised in that. it comprises a second sealed deformable chamber (54) which is filled with a liquid and located between two other portions of each of the two members (32, 34) which are symmetrical to the said two portions of the members (56, 58) with respect to the said axial plane (P) in such a way as to increase the elastic stiffness of the joint in the said direction (T) of relative movement, in both directions of movement.
